# EUROPÄISCHE PATENTSCHRIFT

(11) **EP 0 691 246 B1**
(45) Veröffentlichungstag und Bekanntmachung des Hinweises auf die Patenterteilung: **08.12.1999**
(21) Anmeldenummer: 95107750.2
(22) Anmeldetag: 19.05.1995
(51) Int. Cl.: B60R 22/34, B60R 22/44

(54) **Federangetriebener Gurtaufroller und Verfahren zu dessen Montage**
Spring-based seat belt retraction and method for assembling
Enrouleur de ceinture de sécurité rappelée par ressort et procédé de montage

(30) Priorität: 06.07.1994 DE 4423729
(43) Veröffentlichungstag der Anmeldung: 10.01.1996
(60) Teilanmeldung: 98117274.5
(73) Patentinhaber: TAKATA (EUROPE) VEHICLE SAFETY TECHNOLOGY GmbH, D-89081 Ulm (DE)
(72) Erfinder: Kopetzky, Robert, D-89173 Lonsee (DE); Dreizler, Sabine, D-70619 Stuttgart (DE); Diepold, Ulrich, D-89081 Ulm (DE); Pleyer, Matthias, D-89081 Ulm (DE)
(74) Vertreter: Manitz, Finsterwald & Partner

(56) Entgegenhaltungen:
- EP-A- 0 581 228
- DE-A- 2 606 293
- DE-B- 2 547 586
- FR-A- 884 484
- US-A- 4 303 208
- US-A- 4 588 144
- US-A- 4 630 841

## Beschreibung

Die Erfindung betrifft einen federangetriebenen Aufroller für Sicherheitsgurte und ein Verfahren zur Montage eines federangetriebenen Gurtaufrollers nach den Oberbegriffen der Patentansprüche 1 bzw. 12.

Derartige federangetriebene Aufroller für Sicherheitsgurte bei Kraftfahrzeugen sind aus der EP 0 581 228 A1 bekannt. Sie ermöglichen entweder eine weitgehende Konstanthaltung der Gurtauszugskraft unabhängig von der Gurtauszugslänge oder aber auch eine gewünschte Abhängigkeit der Gurtauszugskraft von der Gurtauszugslänge. So kann z.B. durch geeignete Gestaltung der Wickeloberflächen erreicht werden, daß der Gurt beim Anlegen zunächst nur gegen eine relativ geringe Auszugskraft bis zum In-Eingriff-Kommen der beiden Schloßteile ausgezogen werden kann, worauf dann die Gurtrückzugskraft sprunghaft einen etwas höheren Wert annimmt, wodurch gewährleistet wird, daß der Gurt mit der erforderlichen Straffheit am Körper des Insassen anliegt.

Das flexible Zugelement besteht vorzugsweise aus einem vergleichsweise dünnen Faden. Die Fadendicke beträgt etwa einige Zehntel mm.

Problematisch ist ein erfindungsgemäß arbeitender Gurtaufroller dann, wenn die Gurtrolle zusätzlich durch eine andere Antriebsquelle als die Zuggliedrollenanordnung, z.B. durch eine Gurtstraffervorrichtung beaufschlagt werden kann. In diesem Falle könnte es vorkommen, daß die erste Zuggliedrolle in Abwickelrichtung des flexiblen Zuggliedes so stark beschleunigt wird, daß das flexible Zugglied trotz der es spannenden Federanordnung schlaff wird und durchhängt, wodurch die Gefahr eines Herausgleitens aus den Führungsrillen besteht.

Das Ziel der Erfindung besteht darin, bei einem federangetriebenen Gurtaufroller der eingangs genannten Gattung dafür zu sorgen, daß das Zugglied sich auch dann unter voller Spannung befindet, wenn die Gurtrolle durch andere Antriebswellen in Gurtaufrollrichtung betätigt wird.

Zur Lösung dieser Aufgabe sind die Merkmale der kennzeichnenden Teile der Patentansprüche 1 oder 2 vorgesehen.

Der Freilauf nach Anspruch 1 gewährleistet eine einwandfreie Kraftübertragung von der federgespannten Zuggliedrollenanordnung auf die Gurtrolle beim normalen Betrieb. Wird jedoch an der Gurtrolle z.B. bei einer unfallbedingten Beschleunigung ein Gurtstraffer wirksam, der die Gurtrolle schlagartig in Aufwickelrichtung in Drehung versetzt, so verhindert der Freilauf eine Drehmomentübertragung auf die erste Zuggliedrolle, wodurch das Zugglied auch aufgrund der Wirkung der Federanordnung voll gespannt bleibt und die Gefahr eines Herausspringens aus den Führungsrillen gebannt ist.

Auch das elastisch nachgiebige Drehmomentübertragungsglied nach Anspruch 2 vermeidet abrupte Geschwindigkeitsänderungen zwischen Gurtrolle und erster Zuggliedrolle.

Das elastisch nachgiebige Drehmomentübertragungsglied verhindert dabei nicht nur ein Schlaffwerden des sich zwischen den Zuggliedrollen erstreckenden Zuggliedes, sondern bewirkt darüber hinaus auch noch eine Dämpfung der von der einen auf die anderen Rolle übertragenen Drehmomente. Ein weiterer Vorteil dieser Ausführungsform besteht darin, daß insbesondere elastische Drehmomentübertragungsglieder sehr robust und betriebssicher ausgebildet sein können sowie mit geringem Platzbedarf auskommen.

Vorteilhafte Weiterbildungen dieser Ausführungsform sind durch die Ansprüche 3 bis 10 gekennzeichnet.

Die mit einem elastisch nachgiebigen Drehmomentübertragungsglied arbeitende erfindungsgemäße Lösung erweist sich in folgenden Betriebsfällen als vorteilhaft:
- Sofern ein beispielsweise mit einer pyrotechnischen Ladung arbeitender Gurtstraffer vorgesehen ist, der beispielsweise mittels einer pyrotechnischen Ladung bei einem Unfall ein schlagartiges Drehen der Gurtrolle in Gurtaufwickelrichtung auslöst, verzögert sich aufgrund der Trägheit der ersten Zuggliedrolle, die erfindungsgemäß auch in geeigneter Weise beispielsweise durch eine entsprechend schwere Ausbildung erhöht werden könnte, die Übertragung der plötzlichen Drehbewegung der Gurtrolle in Gurtaufwickelrichtung in einem solchen Maße, daß das sich zwischen erster und zweiter Zuggliedrolle erstreckende Zugglied nicht schlaff wird und so keine Gefahr eines Herausspringens aus den Zuggliedaufnahmerillen besteht.
- Sofern der Gurtstraffer am Gurtschloß vorgesehen ist, erfolgt bei einer unfallbedingten Auslösung zunächst eine starke momentane Beschleunigung der Gurtrolle in Abwickelrichtung, welche ohne das erfindungsgemäße nachgiebige Drehmomentübertragungsglied den Faden bis zum Reissen beanspruchen könnte. Die Drehung der Gurtrolle wird jedoch sofort wieder durch Wirksamwerden der üblicherweise vorgesehenen Auszugssperre abrupt gestoppt. Bei dieser plötzlichen Abbremsung kann durch Nachlaufen der entsprechend stark beschleunigten zweiten Zuggliedrolle das Zugglied ebenfalls schlaff werden und aus einer der Rille herausspringen. Auch in diesem Fall dämpft das erfindungsgemäß vorgesehene Drehmomentübertragungsglied die Bewegung der ersten Zuggliedrolle in einem Maße, daß eine vollständige Entspannung des sich frei zwischen den Zuggliedrollen erstreckenden Fadenstücks vermieden wird.
- Die Dämpfung macht sich auch dann vorteilhaft bemerkbar, wenn der Sicherheitsgurt vom Benutzer beim Anlegen zu schnell ausgezogen wird, wodurch es ebenfalls zum plötzlichen Abbremsen der stark beschleunigten Gurtrolle durch die wirksam werdende Auszugssperre kommt.
- Die Vorspannung des elastisch nachgiebigen Drehmomentübertragungsgliedes hat den Vorteil, daß die relative Dämpfungsbewegung der Gurtrolle und der ersten Zuggliedrolle in beiden Drehrichtungen auftritt.

Durch die Weiterbildung nach Anspruch 11 werden die in den Lagern der Drehachse der Gurtrolle bzw. der ersten Zuggliedrolle und der zweiten Zuggliedrolle auftretenden Reibungskräfte minimiert.

Aufgrund der Abzugsrichtung von Sicherheitsgurt und flexiblem Zugglied auf der gleichen Seite der Drehachse der Gurtrolle werden beim Aus- bzw. Einziehen des Sicherheitsgurtes die Lagerreibungskräfte in dem Lager bzw. in den Lagern der Gurtrolle zumindest so stark reduziert, daß nur geringe Lagerreibung auftritt. Aufgrund des geringen Durchmessers der Drehachse der zweiten Zuggliedrolle kann auch dort die Lagerreibung minimal gehalten werden. Bevorzugt beträgt der Durchmesser der vorzugsweise gehäusefest angeordneten Drehachse der zweiten Zuggliedrolle nur 2 bis 5 mm.

Um die unter voller Federspannung stehende Zuggliedrollenanordnung problemlos bis zum Zusammenbau mit der Gurtrolle aufbewahren und transportieren zu können, sieht die Erfindung das Verfahren zur Montage eines federangetriebenen Gurtaufrollers nach Patentanspruch 12 vor.

Vorteilhafte Weiterbildungen dieses Verfahrens entnimmt man den Ansprüchen 13 bis 16.

Durch das erfindungsgemäße Drehsicherungselement kann die vollständig vorgespannte, d.h. mit einer voll bewickelten ersten Zuggliedrolle versehene Zuggliedanordnung problemlos in dieser Form vormontiert und zum Ort des Zusammenbaus mit der Gurtrolle gebracht werden. Ein weiterer Vorteil des Drehsicherungselementes besteht darin, daß es die noch nicht mit der Drehachse der Gurtrolle verbundene und dadurch drehgeführte erste Zuggliedrolle nicht nur in einer voll vorgespannten, sondern auch innerhalb des die Zuggliedanordnung aufnehmenden Gehäuses weitgehend zentrierter Form festhält, so daß beim Zusammenbau des die Zuggliedanordnung enthaltenden Gehäuses mit dem Gurtaufrollmechanismus eine so weitgehende Ausrichtung der ersten Zuggliedrolle mit der Gurtrolle gewährleistet ist, daß ein problemloses axiales Zusammenstecken dieser beiden gewährleistet ist. Beispielsweise kann die erste Zuggliedrolle eine axiale Vierkantöffnung aufweisen, in welche ein an der Welle der Gurtrolle vorgesehener Vierkantstift eingreifen kann.

Die Erfindung wird im folgenden beispielsweise anhand der Zeichnungen beschrieben; in diesen zeigt
- Fig. 1: eine schematische Schnittansicht eines erfindungsgemäßen federangetriebenen Gurtaufrollers,
- Fig. 2: eine perspektivische schematische Wiedergabe der Zuggliedrollenanordnung nach Fig. 1, wobei zusätzlich ein Freilauf zwischen Gurtrolle und erster Fadenrolle vorgesehen ist,
- Fig. 3: einen schematischen Schnitt durch die erste Fadenrolle des Gurtaufrollers nach den Fig. 1 und 2, wobei links und rechts der Mittelachse 36 der ersten Fadenrolle zwei verschiedene Ausführungsformen gezeigt sind, und
- Fig. 4: eine Schnittansicht analog Fig. 1, wobei zwischen Gurtrolle und erster Fadenrolle zwei Ausführungsbeispiele eines elastischen Drehmomentübertragungsgliedes wiedergegeben sind, von denen eines in ausgezogenen Linien und das andere gestrichelt dargestellt ist.

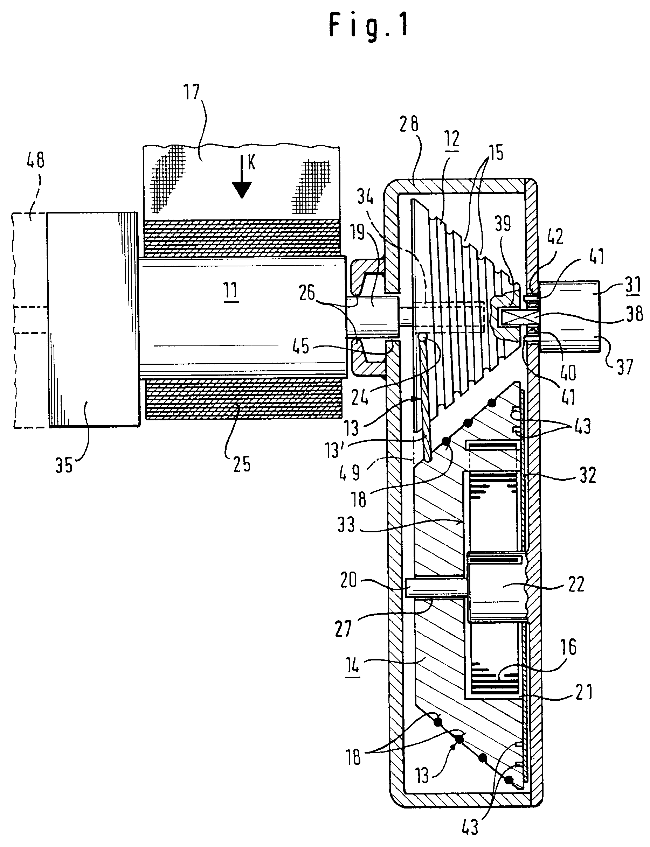

Nach Fig. 1 weist ein erfindungsgemäßer Gurtaufroller eine Gurtrolle 11 auf, auf die ein nur mit einem kurzen Stück angedeuteter Sicherheitsgurt 17 aufwickelbar ist. Die Gurtrolle 11 ist mittels einer Welle 19 von relativ großem Durchmesser in zumindest einem nur schematisch angedeuteten Lager 26 drehbar an einem Gehäuse 28 gelagert. An dem von der Gurtrolle 11 abgewandten Ende der Welle 19 ist innerhalb des Gehäuses 28 eine konisch ausgebildete Fadenrolle 12 angeordnet, welche auf ihrem Umfang mit einer wendelförmigen Führungsrille 15 versehen ist.

Nach Fig. 1 ist neben der Fadenrolle 12 mit paralleler Achse 20 und seitlich ausgerichtet eine weitere Fadenrolle 14 vorgesehen, welche gegenläufig zu der ersten Fadenrolle 12 konisch verläuft und deren kleinerer Durchmesser gleich dem größeren Durchmesser der ersten Fadenrolle 12 ist. Auch die zweite Fadenrolle 14 weist auf ihrem Umfang eine wendelförmige Führungsrille 18 auf.

Die zweite Fadenrolle 14 sitzt drehbar auf einer gehäusefesten Welle 20, die parallel und im seitlichen Abstand zur Welle 19 am Gehäuse 28 befestigt ist und einen wesentlich geringeren Durchmesser als die Welle 19 aufweist, so daß die Reibung in dem zwischen der Welle 20 und der zweiten Fadenrolle 14 gebildeten Zapfenlager 27 möglichst gering ist. Zweckmäßigerweise soll der Durchmesser der Welle 20 bzw. des Lagers 27 5 mm nicht übersteigen.

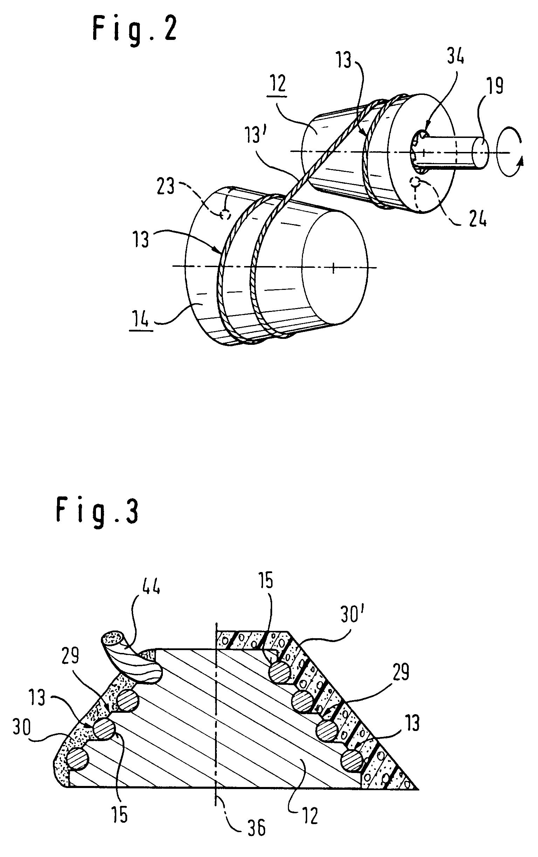

Die zweite Fadenrolle 14 weist gemäß Fig. 1 einen koaxialen Hohlraum 21 auf, in welchem eine Spiralfederanordnung 16 vorgesehen ist, die einerseits an einem die Welle 20 tragenden gehäusefesten Zapfen 22 und andererseits am Innenumfang der Fadenrolle 14 befestigt ist. Die Spiralfeder 16 überträgt auf die Fadenrolle 14 ein Drehmoment, welche einen in ihre Führungsrille 18 eingelegten und gemäß Fig. 2 bei 23 befestigte Faden 13 aufzuwickeln trachtet. Der Faden 13 erstreckt sich nach den Fig. 1 und 2 von dem engsten Teil der Fadenrolle 14 zu einem damit ausgerichteten Teil der Führungsrille 15 der Fadenrolle 12, wo der Faden 13 bei 24 an der Oberfläche der Fadenrolle 12 befestigt ist.

In der aus Fig. 1 ersichtlichen Wickelposition ist der Faden 13 weitgehend vollständig auf die Fadenrolle 14 aufgewickelt und weitgehend vollständig von der ersten Fadenrolle 12 abgewickelt. In diesem Zustand ist der Gurtwickel 25 auf der Gurtrolle 11 am dicksten, d.h., daß nunmehr eine maximale Gurtlänge auf der Gurtrolle 11 aufgewickelt ist und der Gurt 17 seine geringste Länge erreicht hat.

Wird nun der Gurt 17 entgegen der Rückzugskraft K in Fig. 1 langsam ausgezogen, so dreht sich die erste Fadenrolle 12 in einem Drehsinn, daß der Faden 13 sukzessive auf die erste Fadenrolle 12 aufgewickelt wird, wobei er sich zunehmend in die Führungsrille 15 einlegt. Gleichzeitig wird der Faden 13 mehr und mehr von der zweiten Fadenrolle 14 abgewickelt. Bei schnellem Ausziehen des Sicherheitsgurtes 17 oder bei unfallbedingten Beschleunigungen wird in üblicher Weise eine nur schematisch angedeutete Gurtauszugssperre 48 wirksam, die ein weiteres Ausziehen des Sicherheitsgurtes 17 verhindert. Weiter kann auf die Gurtrolle 11 eine Gurtstraffereinrichtung 35 einwirken, die bei einer unfallbedingten Beschleunigung ein schlagartiges Aufwickeln des Sicherheitsgurtes 17 um ein vorbestimmtes Stück auslöst, damit dieser sich fest an den Körper der gesicherten Person anlegt, worauf dann ebenfalls die Auszugssperre wirksam wird.

Da erfindungsgemäß der Steigungswinkel, d.h. der Winkel zwischen der geradlinigen Verlängerung der Führungsrillen 15, 18 an den Einmündungsstellen des geradlinigen Fadenstückes 13' und der senkrecht auf der Drehachse 19, 20 stehenden Ebene 49, beider Führungsrillen 15, 18 an den Einmündungsstellen gleich ist und außerdem durch entsprechende Befestigung der Fadenenden bei 23, 24 dafür gesorgt ist, daß das frei und geradlinig zwischen den Fadenrollen 12, 14 verlaufende Fadenstück 13' knickfrei in die beiden Führungsrillen 15, 18 einmündet, nimmt bei gleichmäßigem axialen Abstand der Führungsrille 15 auf der ersten Fadenrolle 12 der axiale Abstand der Windungen der Führungsrille 18 auf der einen größeren Durchmesser aufweisenden Fadenrolle 14 axial zu größerem Durchmesser hin stetig zu, was aus Vereinfachungsgründen in der Zeichnung nicht im einzelnen dargestellt ist, sich aber aus der EP 0 581 228 A1 im einzelnen ergibt.

Nach Fig. 1 ist auf der der Gurtrolle 11 axial gegenüberliegenden Seite des Gehäuses 28 ein Drehsicherungselement 31 vorgesehen, welches lediglich während der Montage der Gesamtanordnung dort angebracht wird. Es besteht aus einem zylindrischen Kopf 37, der einen zentralen Vierkantzapfen 38 aufweist, der durch eine runde Bohrung 40 in der Wand des Gehäuses 28 in eine dazu komplementäre koaxiale Vierkantbohrung 39 der ersten Fadenrolle 12 eingreift. Weiter erstrecken sich von der gleichen Seite wie der Vierkantzapfen 38 Stifte 41 in dazu komplementäre Bohrungen 42 der Wand des Gehäuses 28. Aufgrund dieser Anordnung des Drehsicherungselementes 31 wird die erste Fadenrolle 12 drehfest am Gehäuse 28 gehalten. Es wäre auch möglich, die Bohrung 40 wie den Zapfen 38 vierkantförmig zu gestalten und auf die Stifte 41 sowie die Bohrungen 42 zu verzichten. Weiter könnten die Stifte 41 bis in entsprechende Bohrungen in der Fadenrolle 12 reichen und auf den Vierkantzapfen 38 sowie die Bohrungen 39, 40 verzichtet werden.

Nach Fig. 1 ist der Hohlraum 21, in welchem die Spiralfeder 16 angeordnet ist, auf der den größten Durchmesser aufweisenden Seite der zweiten Fadenrolle 14 durch eine plattenartige Abdeckung 32 abgedeckt, welche durch geeignete Befestigungsmittel 43 drehfest mit der Fadenrolle 14 verbunden ist.

Die Abdeckung 32 kann als durchgehende Platte ausgebildet sein, doch besteht sie bevorzugt aus einer mit zahlreichen Durchbrechungen versehenen Platte, da es nur darauf ankommt, daß die Spiralfeder 16 sowohl auf der Seite der Abdeckung 32 als auch an der gegenüberliegenden Seite des Hohlraumes 21 (Wand 33) ausschließlich mit drehenden Teilen in Berührung kommt.

Nach den Fig. 1 und 2 ist die Gurtrolle 11 drehfest mit der ersten Drehachse 19 verbunden, welche nicht direkt, sondern vielmehr über eine Freilaufanordnung 34 koaxial in Verbindung mit der ersten Fadenrolle 12 steht. Weiter ist die Gurtrolle 11 mit einer nur schematisch angedeuteten Gurtstraffereinrichtung 35 verbunden, welche im Falle einer unfallbedingten Beschleunigung eine schlagartige Drehung der Gurtrolle 11 in Gurtaufrollrichtung bewirkt, damit der zunächst lose am Körper des Insassen anliegende Sicherheitsgurt 17 so stark gestrafft wird, daß der Insasse nicht in einen zu lockeren Gurt hineinfällt und dadurch Schaden nimmt.

Wie sich insbesondere aus Fig. 2 ergibt, ist die Freilaufanordnung 34 so ausgebildet, daß zwar jederzeit von der Fadenrolle 12 beim Abwickeln des Fadens 13 ein Aufrollmoment auf die Gurtrolle 11 ausgeübt wird, jedoch beim Antrieb der Gurtrolle 11 durch die Gurtstraffereinrichtung 35 in Richtung des Pfeiles in Fig. 2 kein oder nur ein minimales Drehmoment auf die erste Fadenrolle 12 übertragen wird. Auf diese Weise wird vermieden, daß durch eine zu starke Beschleunigung der ersten Fadenrolle 12 in Fadenabwickelrichtung das Zugelement 13 locker wird und aus den Führungsrillen 15, 18 herausspringt.

Die Freilaufanordnung kann auch durch eine Ratschenanordnung verwirklicht werden.

Gemäß Fig. 3 kann der auf die erste Fadenrolle 12 bei der Montage aufgewickelte Faden 13 entweder durch eine Wachsschicht 30 abgedeckt werden, welcher die gesamte bewickelte Oberfläche 29 überzieht und dadurch ein Herabfallen der Windungen des Fadens 13 aus den Führungsrillen 15 verhindert. Zur Sicherung des Fadens 13 in der Führungsrille 15 kann aber nach der Darstellung rechts von der Mittelachse 36 auch eine z.B. aus Schaumstoff bestehende Abdeckhaube 30' verwendet werden, die von der den geringeren Durchmesser aufweisenden Seite der konischen Fadenrolle 12 aufgesetzt wird und überall an der bewickelten Oberfläche 29 anliegt und dadurch den Faden 13 in der Führungsrille 15 hält.

Die Montage eines erfindungsgemäßen Gurtaufrollers geht nun wie folgt vor sich:

Zunächst wird durch eine geeignete Vorrichtung der Faden 13 auf die erste Fadenrolle 12 aufgewickelt und dann mittels einer Wachsschicht 30 (Fig. 3 links von der Mittelachse 36) oder eine elastische Abdeckhaube 30' (Fig. 3 rechts von der Mittelachse 36) in der aufgewickelten Position fixiert.

Nunmehr werden die Fadenrollen 12, 14 im Gehäuse 28, das in geeigneter Weise zu öffnen ist, angeordnet. Das vom den geringen Durchmesser aufweisenden axialen Ende der ersten Zuggliedrolle 12 vorstehende Fadenende 44 wird nunmehr an der daneben befindlichen zweiten Fadenrolle 14 in geeigneter Weise befestigt, und zwar bei voll vorgespannter Spiralfeder 16. Auch hierfür kann eine geeignete Montagevorrichtung verwendet werden.

Um nun nach dem Anbringen des Fadenendes 44 an der zweiten Fadenrolle 14 ein sofortiges Abwickeln des Fadens 13 von der ersten Fadenrolle 12 zu verhindern, wird die erste Fadenrolle 12 durch Einstecken des Vierkantzapfens 38 des Drehsicherungselementes 31 in die Vierkantbohrung 39 und der Stifte 41 in die Bohrungen 42 des Gehäuses 28 drehfest am Gehäuse 28 gehalten. Hierbei wird das Zugelement 13 so gespannt, daß es sicher in den Führungsrillen 15, 18 gehalten wird.

In diesem Stadium der Montage ist die Drehachse 19 der Gurtrolle 11 mit der Freilaufanordnung 34 noch nicht in die erste Fadenrolle 12 eingesteckt, so daß die erste Fadenrolle 12 ausschließlich durch das Drehsicherungselement 31 nicht nur drehfest, sondern auch zentriert, d.h. axial mit der Durchtrittsbohrung 45 im Gehäuse 28 für die Drehachse 19 ausgerichtet ist.

Nunmehr kann die im Gehäuse 28 funktionsfähig angebrachte Fadenanordnung durch Einstecken der Drehachse 19 mit der Freilaufanordnung 34 in eine entsprechende unrunde Bohrung der ersten Fadenrolle 12 mit der Gurtrolle 11 verbunden werden.

Nach Herstellung dieser Verbindung wird das Drehsicherungselement 31 axial vom Gehäuse 28 abgezogen, worauf die Spiralfeder 16 die erste Fadenrolle 12 über die zweite Fadenrolle 14 und den Faden 13 in Gurtaufwickelrichtung drehen kann und die Gurtrolle 11 entsprechend mitgenommen wird, wobei der Gurtwickel 25 gebildet wird.

Beim jetzt erfolgenden Abwickeln des Fadens 13 von der ersten Gurtrolle 12 platzt die Wachsschicht 30 (Fig. 3) einfach ab, wodurch die Führungsrille 15 schließlich völlig freigelegt wird.

Durch Herausziehen des Sicherheitsgurtes 17 entgegen dem Pfeil K in Fig. 1 wird dann die erste Fadenrolle 12 wieder in entgegengesetzter Richtung gedreht, wobei der Faden 13 sich zunehmend von der zweiten Fadenrolle 14 ab- und auf die erste Fadenrolle 12 aufwickelt. Die Freilaufanordnung 34 gewährleistet hierbei eine einwandfreie Drehmomentübertragung.

Wird nun im Falle einer unfallbedingten Beschleunigung die Gurtstraffereinrichtung 35 betätigt, so wird die Gurtrolle 11 in Gurtaufwickelrichtung schlagartig in Drehung versetzt, wobei jedoch die Freilaufanordnung 34 eine Übertragung des entsprechenden Drehmomentes von der Drehachse 19 auf die erste Fadenrolle 12 verhindert und so ein Schlaffwerden des Fadens 13 vermieden wird. Sobald der Sicherheitsgurt 17 gestrafft ist und die Gurtauszugssperre zur Wirkung gekommen ist, steht die Gurtrolle 11 still, und der Antrieb der ersten Zuggliedrolle 12 durch die Federanordnung 16 über die zweite Zuggliedrolle 14 und den Faden 13 führt zum erneuten Einrücken des Freilaufs 34.

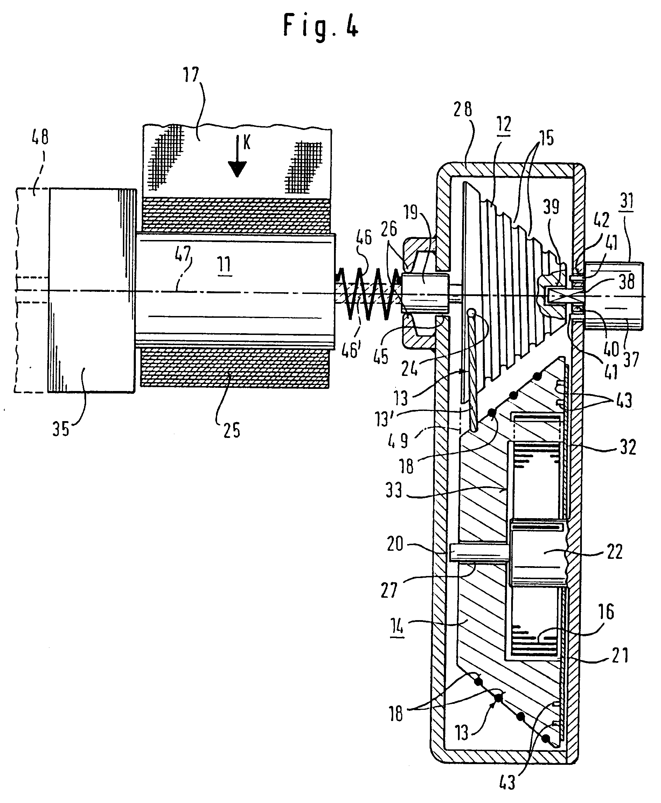

Nach Fig. 4, in der gleiche Bezugszahlen entsprechende Bauelemente wie in den vorangehenden Figuren bezeichnen, ist zwischen die Drehachse 19 der ersten Fadenrolle 12 und die Drehachse 47 der Gurtrolle 11 eine Schraubenfeder 46 angeordnet, welche ein elastisches Drehmomentübertragungsglied darstellt. Die Feder 46 arbeitet erfindungsgemäß als Torsionsfeder und könnte beispielsweise auch durch eine Spiralfeder oder einen in Fig. 4 gestrichelt angedeuteten Torsionsstab 46' ersetzt werden.

Der Wickelsinn der Schraubenfeder 46 ist derart, daß die von der Federanordnung 16 über die zweite Fadenrolle 14 und den Faden 13 zu einer Drehbewegung angetriebene erste Fadenrolle 12 bei festgespanntem Sicherheitsgurt 17 oder wirksam gewordener Auszugssperre die Schraubenfeder 46 etwa bis zur Hälfte des zur Verfügung stehenden Feder-Winkelbewegungsbereiches eindreht. Dann ist ein Gleichgewicht zwischen den Drehmomenten der Federanordnung 16 und der Schraubenfeder 46 erreicht, so daß die Drehbewegung der Fadenrollen 12, 14 beendet wird.

Wenn der Sicherheitsgurt 17 zu locker an der angeschnallten Person anliegt, setzt die Vorspannung der Schraubenfeder 46 die Gurtrolle 11 in Aufwickelrichtung in Bewegung. Aufgrund der hierdurch erfolgenden Entspannung der Schraubenfeder 46 kann die Federanordnung 16 die Fadenrollen 12, 14 erneut in Drehung versetzen, so daß die Schraubenfeder 46 immer wieder nachgespannt wird und die Gurtrolle 11 sich weiter dreht, bis der Gurt 17 sich in der gewünschten Weise an die gesicherte Person angelegt hat, worauf sich das Gleichgewicht zwischen den Federn 16 und 46 erneut selbsttätig einstellt.

Wird nun der Gurtstraffer 35 im Falle einer unfallbedingten Beschleunigung wirksam, so wird die Gurtrolle 11 schlagartig in Gurtaufwickelrichtung in Drehbewegung versetzt, wobei augenblicklich die Feder 46 entspannt wird und kein Drehmoment auf die erste Fadenrolle 12 ausübt, wodurch der Faden 13 weitgehend straff bleibt. Aufgrund des herabgesetzten Drehmomentes der Schraubenfeder 46 beginnt jedoch jetzt die Federanordnung 16 die Fadenrollen 12, 14 zu drehen, bis schließlich das Gleichgewicht zwischen den Drehmomenten der Federn 16 und 46 wieder hergestellt ist. Durch Einschaltung der Feder 46 wird also eine Entspannung des Fadens 13 und somit ein Herausspringen aus den Rillen 15, 18 vermieden.

Der gleiche Dämpfungseffekt wird erzielt, wenn der Sicherheitsgurt 17 plötzlich ausgezogen und dann anschließend gleich durch die Auszugssperre 48 wieder angehalten wird. Die Feder 46 verhindert dabei ein so plötzliches Abstoppen der Drehbewegung der ersten Fadenrolle 12, daß ein Weiterdrehen der zweiten Fadenrolle 14 aufgrund ihrer Trägheit nicht zur völligen Entspannung des Fadens 13 führt.

Die gleichen Wirkungen werden durch einen entsprechend dimensionierten elastischen Block 46' erzielt, der eine Torsionsfeder darstellt und zwischen den Drehachsen 19, 47 wirksam ist.

Es wäre auch möglich, die Drehachsen 19, 47 unmittelbar miteinander zu verbinden und ihrerseits als elastisches Drehübertragungsglieder auszubilden.

### Bezugszeichenliste

- 11: Gurtrolle
- 12: erste Zuggliedrolle (Fadenrolle)
- 13: Faden
- 14: zweite Zuggliedrolle (Fadenrolle)
- 15: Führungsrille
- 16: Spiralfeder
- 17: Sicherheitsgurt
- 18: Führungsrille
- 19: Drehachse
- 20: Drehachse
- 21: Hohlraum
- 22: Zapfen
- 23: Befestigungsstelle
- 24: Befestigungsstelle
- 25: Gurtwickel
- 26: Lager
- 27: Lager
- 28: Gehäuse
- 29: bewickelte Oberfläche
- 30: Wachsschicht
- 31: Drehsicherungselement
- 32: Abdeckplatte
- 33: Wand
- 34: Freilaufanordnung
- 35: Gurtstraffereinrichtung
- 36: Mittelachse
- 37: Zylinderkopf
- 38: Vierkantzapfen
- 39: Vierkantbohrung
- 40: Bohrung
- 41: Stifte
- 42: Bohrung
- 43: Befestigungsmittel
- 44: Fadenende
- 45: Durchtrittsbohrung
- 46: nachgiebiges Drehmomentübertragungsglied (Schraubenfeder, elastischer Block)
- 47: Drehachse
- 48: Gurtauszugssperre
- 49: Ebene

## Patentansprüche

1. Federangetriebener Aufroller für Sicherheitsgurte (17) bei Kraftfahrzeugen mit einer Gurtrolle (11), die drehfest, insbesondere koaxial und direkt, mit einer ersten, sich in einer Axialrichtung verjüngenden Zuggliedrolle (12) mit einer wendelförmigen Führungsrille (15) auf ihrem Umfang verbunden ist, welche über ein entgegen dem Wickelsinn des Sicherheitsgurtes (17) auf der Gurtrolle (11) in die Führungsrille (15) gewickeltes, mit einem Ende an der Zuggliedrolle (12) befestigtes flexibles Zugglied (13) drehfest mit einer weiteren, parallel und in seitlicher Ausrichtung zu ihr angeordneten, zweiten sich in entgegengesetzter Axialrichtung verjüngenden Zuggliedrolle (14) mit einer wendelförmigen Führungsrille (18) verbunden ist, an der das andere Ende des Zuggliedes (13) befestigt und in deren Führungsrille (18) das Zugglied (13) aufgewickelt ist und die durch eine Federanordnung (16), vorzugsweise eine Spiralfederanordnung, in Aufwickelrichtung des Zuggliedes (13) auf der zweiten Zuggliedrolle (14) und des Sicherheitsgurtes (17) auf der Gurtrolle (11) vorgespannt ist, wobei die beiden Führungsrillen (15, 18) derart ausgebildet und auf den Zuggliedrollen (12, 14) angeordnet sind, daß das die beiden Zuggliedrollen (12, 14) verbindende gespannte Zuggliedstück (13') zumindest im wesentlichen knickfrei in beide auf den Zuggliedrollen (12, 14) befindlichen Zuggliedstücke übergeht, und wobei das Zugglied (13) vorzugsweise ein Faden ist,
dadurch **gekennzeichnet,**
daß zwischen die Gurtrolle (11) und die erste Zuggliedrolle (12) eine Freilaufanordnung (34) geschaltet ist, welche bei Antrieb der ersten Zuggliedrolle (12) in Gurtaufrollrichtung Drehmoment auf die Gurtrolle (11) überträgt, bei Antrieb der Gurtrolle (11) in Gurtaufrollrichtung durch eine andere Antriebsquelle, z.B. durch eine Gurtstraffereinrichtung (34) kein oder nur ein minimales Drehmoment auf die erste Zuggliedrolle (12) überträgt.

2. Federangetriebener Aufroller für Sicherheitsgurte (17) bei Kraftfahrzeugen mit einer Gurtrolle (11), die drehfest, insbesondere koaxial und direkt, mit einer ersten, sich in einer Axialrichtung verjüngenden Zuggliedrolle (12) mit einer wendelförmigen Führungsrille (15) auf ihrem Umfang verbunden ist, welche über ein entgegen dem Wickelsinn des Sicherheitsgurtes (17) auf der Gurtrolle (11) in die Führungsrille (15) gewickeltes, mit einem Ende an der Zuggliedrolle (12) befestigtes flexibles Zugglied (13) drehfest mit einer weiteren, parallel und in seitlicher Ausrichtung zu ihr angeordneten, zweiten sich in entgegengesetzter Axialrichtung verjüngenden Zuggliedrolle (14) mit einer wendelförmigen Führungsrille (18) verbunden ist, an der das andere Ende des Zuggliedes (13) befestigt und in deren Führungsrille (18) das Zugglied (13) aufgewickelt ist und die durch eine Federanordnung (16), vorzugsweise eine Spiralfederanordnung, in Aufwickelrichtung des Zuggliedes (13) auf der zweiten Zuggliedrolle (14) und des Sicherheitsgurtes (17) auf der Gurtrolle (11) vorgespannt ist, wobei die beiden Führungsrillen (15, 18) derart ausgebildet und auf den Zuggliedrollen (12, 14) angeordnet sind, daß das die beiden Zuggliedrollen (12, 14) verbindende gespannte Zuggliedstück (13') zumindest im wesentlichen knickfrei in beide auf den Zuggliedrollen (12, 14) befindlichen Zuggliedstücke übergeht, und wobei das Zugglied (13) vorzugsweise ein Faden ist,
dadurch **gekennzeichnet,**
daß zwischen die Gurtrolle (11) und die erste Zuggliedrolle (12) ein elastisch nachgiebiges Drehmomentübertragungsglied (46) geschaltet ist derart, daß das von der Federanordnung (16) an der ersten Zuggliedrolle (12) erzeugte Gurtaufwickel-Drehmoment noch voll auf die Gurtrolle (11) übertragen wird, jedoch bei plötzlichen Drehbeschleunigungen oder -verzögerungen der Gurtrolle (11), z.B. durch einen Gurtstraffer oder plötzliches Abbremsen der Gurtrolle (11), in Gurtaufwickelrichtung bzw. Gurtabwickelrichtung die auf die erste Zuggliedrolle (12) übertragene Drehbeschleunigung bzw. -Verzögerung zumindest solange und in einem solchen Maße reduziert wird, daß das sich von der ersten Zuggliedrolle zur zweiten Zuggliedrolle (14) erstreckende Zugglied (13') nicht zeitweise zugspannungsfrei wird.

3. Aufroller nach Anspruch 2,
dadurch **gekennzeichnet,**
daß das Drehmomentübertragungsglied (46) koaxial zwischen den miteinander ausgerichteten Drehachsen (19, 47) der ersten Zuggliedrolle und der Gurtrolle (11) angeordnet ist.

4. Aufroller nach Anspruch 2 oder 3,
dadurch **gekennzeichnet,**
daß das Drehmomentübertragungsglied (46) durch das Vorspanndrehmoment der Federanordnung (16) um ein deutliches Drehwinkelstück vorgespannt ist.

5. Aufroller nach Anspruch 3,
dadurch **gekennzeichnet,**
daß das Drehmomentübertragungsglied normalerweise auf 30 bis 70%, vorzugsweise 40 bis 60% und insbesondere etwa 50% seiner Gesamt-Drehwinkelbewegungskapazität vorgespannt ist.

6. Aufroller nach einem der Ansprüche 2 bis 5,
dadurch **gekennzeichnet,**
daß die Federkonstante des elastisch nachgiebigen Drehmomentübertragungsgliedes (46) so gewählt ist, daß die zeitweise völlige Entspannung des sich zwischen der ersten und zweiten Zuggliedrolle (12, 14) erstreckende Fadenstück (13') vermieden wird.

7. Aufroller nach einem der Ansprüche 3 bis 6,
dadurch **gekennzeichnet,**
daß das Drehmomentübertragungsglied eine parallel und konzentrisch zu den Drehachsen (19, 47) der ersten Zuggliedrolle (12) und der Gurtrolle (11) angeordnete Schraubenfeder (46) ist, deren Enden mit der Gurtrolle (11) bzw. der ersten Zuggliedrolle (12) fest verbunden sind.

8. Aufroller nach Anspruch 7,
dadurch **gekennzeichnet,**
daß der Wickelsinn der Schraubenfeder (46) derart ist, daß sie durch das Vorspanndrehmoment der Federanordnung (16) zusammengedreht wird.

9. Aufroller nach einem der Ansprüche 3 bis 6,
dadurch **gekennzeichnet,**
daß das Drehmomentübertragungsglied ein elastischer Block (46') ist, der einerseits mit der Gurtrolle (11) und andererseits mit der ersten Zuggliedrolle (12) fest verbunden ist.

10. Aufroller nach einem der Ansprüche 3 bis 6,
dadurch **gekennzeichnet,**
daß die vorzugsweise koaxial miteinander verbundenen Achsen (19, 47) der ersten Zuggliedrolle (12) und der Gurtrolle (11) selbst als das elastisch nachgiebige Drehmomentübertragungsglied ausgebildet sind.

11. Aufroller nach einem der Ansprüche 1 bis 10,
dadurch **gekennzeichnet,**
daß der Sicherheitsgurt (17) auf der gleichen Seite der Drehachse (19) der Gurtrolle (11) wie das Zugglied (13) von der ersten Zuggliedrolle (12), jedoch in entgegengesetzter Richtung wie das Zugglied (13) abgezogen wird und daß der Durchmesser der Drehachse (20) der auf der von der Gurtauszugsrichtung abgewandten Seite der ersten Zuggliedrolle (12) angeordneten zweiten Zuggliedrolle (14) deutlich geringer als der der Drehachse (19) der Gurtrolle (11) ist.

12. Verfahren zur Montage eines federangetriebenen Gurtaufrollers für Sicherheitsgurte mit einer Gurtrolle (11), die drehfest, insbesondere koaxial und direkt, mit einer ersten, sich in einer Axialrichtung verjüngenden Zuggliedrolle (12) mit einer wendelförmigen Führungsrille (15) auf ihrem Umfang verbunden ist, welche über ein entgegen dem Wickelsinn des Sicherheitsgurtes (17) auf der Gurtrolle (11) in die Führungsrille (15) gewickeltes, mit einem Ende an der Zuggliedrolle (12) befestigtes flexibles Zugglied (13) drehfest mit einer weiteren, parallel und in seitlicher Ausrichtung zu ihr angeordneten, zweiten sich in entgegengesetzter Axialrichtung verjüngenden Zuggliedrolle (14) mit einer wendelförmigen Führungsrille (18) verbunden ist, an der das andere Ende des Zuggliedes (13) befestigt und in deren Führungsrille (18) das Zugglied (13) aufgewickelt ist und die durch eine Federanordnung (16), vorzugsweise eine Spiralfederanordnung, in Aufwickelrichtung des Zuggliedes (13) auf der zweiten Zuggliedrolle (14) und des Sicherheitsgurtes (17) auf der Gurtrolle (11) vorgespannt ist, wobei die beiden Führungsrillen (15, 18) derart ausgebildet und auf den Zuggliedrollen (12, 14) angeordnet sind, daß das die beiden Zuggliedrollen (12, 14) verbindende gespannte Zuggliedstück (13') zumindest im wesentlichen knickfrei in beide auf den Zuggliedrollen (12, 14) befindlichen Zuggliedstücke übergeht, und wobei das Zugglied (13) vorzugsweise ein Faden ist, insbesondere zur Montage eines Gurtaufrollers,
dadurch **gekennzeichnet,**
daß nach dem Zusammenbau der mit dem Zugglied (13) bewickelten ersten Zuggliedrolle (12) mit der unter Federspannung stehenden mit dem Zugglied (13) verbundenen zweiten Zuggliedrolle (14) im Gehäuse (18) die erste Zuggliedrolle (12) mittels einer Drehsicherung (31) gegen ein Abwickeln des Zuggliedes (13) durch die federgespannte zweite Zuggliedrolle (14) gehalten wird, bis die drehfeste Verbindung mit der Gurtrolle (11) hergestellt ist.

13. Verfahren nach Anspruch 12,
dadurch **gekennzeichnet,**
daß nach dem Zusammenbau die erste Zuggliedrolle (12) voll mit dem Zugglied (13) bewickelt ist.

14. Verfahren nach Anspruch 12 oder 13,
dadurch **gekennzeichnet,**
daß nach dem Zusammenbau die zweite Zuggliedrolle (14) unter voller Federspannung steht.

15. Verfahren nach einem der Ansprüche 12 bis 14,
dadurch **gekennzeichnet,**
daß die Drehsicherung durch ein Drehsicherungselement (31) herbeigeführt wird, welches sowohl mit der ersten Zuggliedrolle (12) als auch mit dem Gehäuse (28) in drehfestem Eingriff steht.

16. Verfahren nach einem der Ansprüche 12 bis 15,
dadurch **gekennzeichnet,**
daß das Drehsicherungselement (31) die erste Zuggliedrolle (12) auch bei noch nicht montierter Gurtrolle (11) zentriert hält.

## Claims

1. Spring-driven reeling mechanism for safety belts (17) in motor vehicles comprising a belt reel (11) which is rotationally fixedly connected, in particular coaxially and directly connected to a first draw reel (12) which tapers in an axial direction and has a spirally-shaped guide groove (15) on its periphery and which is rotationally fixedly connected, via a flexible draw member (13) wound contrary to the direction of winding of the safety belt (17) on the belt reel (11) into the guide groove (15) and secured at one end to the draw reel (12), to a further second draw reel (14), which has a spiral guide groove (18), which tapers in the opposite axial direction and which is arranged parallel to and aligned sideways relative to the first draw reel (12), with the other end of the draw member (13) being secured to the second draw reel (14) and being wound into its guide groove (18), wherein said second draw reel (14) is biased by a spring arrangement (16), preferably a spiral spring arrangement, in the winding-up direction of the draw member (13) onto the second draw reel (14) and of the safety belt (17) onto the belt reel (11), and wherein the two guide grooves (15, 18) are so shaped and arranged on the draw reels (12, 14) that the tensioned draw member piece (13') which connects the two draw reels (12, 14) passes essentially kink-free into the two draw member pieces on the draw reels (12, 14), with the draw member (13) preferably being a thread (13), characterised in that a free wheel arrangement (34) is inserted between the belt reel (11) and the first draw reel (12) which, on driving of the first draw reel(12) in the belt reeling-up direction, transmits torque to the belt reel (11) and, on driving of the belt reel (11) in the belt reel-up direction by another drive source, for example by a belt tensioning device (34), transmits no torque or only minimal torque to the first draw reel (12).

2. Spring-driven reeling mechanism for safety belts (17) in motor vehicles comprising a belt reel (11) which is rotationally fixedly connected, in particular coaxially and directly connected to a first draw reel (12) which tapers in an axial direction and has a spirally-shaped guide groove (15) on its periphery and which is rotationally fixedly connected, via a flexible draw member (13) wound contrary to the direction of winding of the safety belt (17) on the belt reel (11) into the guide groove (15) and secured at one end to the draw reel (12), to a further second draw reel (14), which has a spiral guide groove (18), which tapers in the opposite axial direction and which is arranged parallel to and aligned sideways relative to the first draw reel (12), with the other end of the draw member (13) being secured to the second draw reel (14) and being wound into its guide groove (18), wherein said second draw reel (14) is biased by a spring arrangement (16), preferably a spiral spring arrangement, in the winding-up direction of the draw member (13) onto the second draw reel (14) and of the safety belt (17) onto the belt reel (11), and wherein the two guide grooves (15, 18) are so shaped and arranged on the draw reels (12, 14) that the tensioned draw member piece (13') which connects the two draw reels (12, 14) passes essentially kink-free into the two draw member pieces on the draw reels (12, 14), with the draw member (13) preferably being a thread (13), characterised in that an elastically yieldable torque transmission member (46) is inserted between the belt reel (11) and the first draw reel (12) such that the belt winding-up torque produced by the spring arrangement (16) at the first draw reel (12) is still fully transmitted to the belt reel (11) but with sudden rotary accelerations or retardations of the belt reel (11), for example by a belt tensioner or sudden braking of the belt reel (11), the rotary acceleration or retardation transmitted to the first draw reel (12) in the belt winding-up direction or in the belt unwinding direction respectively is reduced at least so long and to such a degree that the draw member (13') extending from the first draw reel to the second draw reel (14) is not temporally tension free.

3. Belt reeling mechanism in accordance with claim 2, characterised in that the torque transmission member (46) is coaxially arranged between the aligned axles (19, 47) of the first draw reel and of the belt reel (11).

4. Belt reeling mechanism in accordance with claim 2 or 3, characterised in that the torque transmission member (46) is prestressed by a clear amount of angular rotation by the prestressing torque of the spring arrangement (16).

5. Belt reeling mechanism in accordance with claim 3, characterised in that the torque transmission member is normally prestressed to 30 to 70 %, preferably to 40 to 60 % and in particular to about 50 % of its total capacity for angular rotational movement.

6. Belt reeling mechanism in accordance with one of the claims 2 to 5, characterised in that the spring constant of the elastically yieldable torque transmission member (46) is so selected that the temporary full relaxation of the thread piece (13') extending between the first and second draw reels (12, 14) is avoided.

7. Belt reeling mechanism in accordance with one of the claims 3 to 6, characterised in that the torque transmission member is a coil spring (46) disposed parallel and concentric to the axles of rotation (19, 47) of the first draw reel (12) and of the belt reel (11), with the ends of the coil spring being firmly connected to the belt reel (11) and to the first draw reel (12) respectively.

8. Belt reeling mechanism in accordance with claim 7, characterised in that the winding sense of the coil spring (46) is such that it is twisted tighter by the prestressing torque of the spring arrangement (16).

9. Belt reeling mechanism in accordance with one of the claims 3 to 6, characterised in that the torque transmission member is an elastic block (46') which is firmly connected, on the one hand, to the belt reel (11) and, on the other hand, to the first draw reel (12).

10. Belt reeling mechanism in accordance with one of the claims 3 to 6, characterised in that the preferably coaxial, connected together axles (19, 47) of the first draw reel (12) and of the belt reel (11) are themselves formed as the elastically yieldable torque transmission member.

11. Belt reeling mechanism in accordance with one of the claims 1 to 10, characterised in that the safety belt (17) is drawn off on the same side of the rotational axle (19) of the belt reel (11) as the draw member (13) from the first belt reel (12), but in the opposite direction to the draw member, and in that the diameter of the rotational axle (20) of the second draw reel (14) arranged at the side of the first draw reel (12) remote from the belt extraction direction is significantly smaller than that of the rotational axle (19) of the belt reel (11).

12. Method for the installation of a spring-driven belt reeling mechanism for safety belts comprising a belt reel (11) which is rotationally fixedly connected, in particular coaxially and directly connected to a first draw reel (12) which tapers in an axial direction and has a spirally-shaped guide groove (15) on its periphery and which is rotationally fixedly connected, via a flexible draw member (13) wound contrary to the direction of winding of the safety belt (17) on the belt reel (11) into the guide groove (15) and secured at one end to the draw reel (12), to a further second draw reel (14), which has a spiral guide groove (18), which tapers in the opposite axial direction and which is arranged parallel to and aligned sideways relative to the first draw reel (12), with the other end of the draw member (13) being secured to the second draw reel (14) and being wound into its guide groove (18), wherein said second draw reel (14) is biased by a spring arrangement (16), preferably a spiral spring arrangement, In the winding-up direction of the draw member (13) onto the second draw reel (14) and of the safety belt (17) onto the belt reel (11), and wherein the two guide grooves (15, 18) are so shaped and arranged on the draw reels (12, 14) that the tensioned draw member piece (13') which connects the two draw reels (12, 14) passes essentially kink-free into the two draw member pieces on the draw reels (12, 14), with the draw member (13) preferably being a thread (13), in particular for the installation of a belt reeling mechanism, characterised in that, after the assembly of the first draw reel (12) wound with the draw member (13) to the second draw reel (14) in the housing (18), which is connected to the draw member (13) which stands under spring tension, the first draw reel (12) is held by means of the security against rotation (31) against unwinding of the draw member (13) by the spring-tensioned second draw reel (14) until the rotationally fixed connection to the belt reel (11) is established.

13. Method in accordance with claim 12, characterised in that, after the assembly, the first draw reel (12) is fully wound with the draw member (13).

14. Method in accordance with claim 12 or 13, characterised in that, after the assembly, the second draw reel (14) stands under the full spring tension.

15. Method in accordance with one of the claims 12 to 14, characterised in that the security against rotation is produced by an element (31) providing security against rotation which stands in rotationally fixed engagement both with the first draw reel (12) and also with the housing (28).

16. Method in accordance with one of the preceding claims 12 to 15, characterised in that the element (31) providing security against rotation holds the first draw reel (12) centred even when the belt reel (11) is not yet installed.

## Revendications

1. Enrouleur entraîné par ressort, pour des ceintures de sécurité (17) dans des véhicules automobiles, comprenant un rouleau à ceinture (11), relié solidairement en rotation, en particulier coaxialement et directement, à un premier rouleau d'organe de traction (12) en rétrécissement en direction axiale et doté d'une rainure de guidage (15) de forme hélicoïdale sur sa périphérie, ce premier rouleau d'organe de traction étant relié solidairement en rotation à un deuxième rouleau d'organe de traction (14) en rétrécissement en direction axiale opposée, agencé parallèlement et en alignement latéral vis-à-vis du premier et pourvu d'une rainure de guidage (18) de forme hélicoïdale, par l'intermédiaire d'un organe de traction flexible (13) enroulé dans la rainure de guidage (15) du premier rouleau dans le sens opposé au sens d'enroulement de la ceinture de sécurité (17) sur le rouleau à ceinture (11) et fixé par une extrémité au rouleau d'organe de traction (12), l'autre extrémité dudit organe de traction (13) étant fixée au deuxième rouleau d'organe de traction (14) de telle manière que l'organe de traction (13) est enroulé dans la rainure de guidage (18) de ce deuxième rouleau, ce dernier étant précontraint au moyen d'un système à ressort (16), de préférence un système à ressort spiralé, dans la direction d'enroulement de l'organe de traction (13) sur le deuxième rouleau d'organe de traction (14) et de la ceinture de sécurité (17) sur le rouleau à ceinture (11), les deux rainures de guidage (15, 18) étant réalisées et agencées sur les rouleaux d'organes de traction (12, 14) de telle manière que le morceau (13') tendu de l'organe de traction qui relie les deux rouleaux d'organes de traction (12, 14) passe sensiblement sans coudage dans les deux morceaux d'organes de traction qui se trouvent sur les rouleaux d'organes de traction (12, 14), et dans lequel ledit organe de traction (13) est de préférence un câble,
caractérisé en ce que
entre le rouleau à ceinture (11) et le premier rouleau d'organe de traction (12) est interposé un système à roue libre (34) qui transmet, lors de l'entraînement du premier rouleau d'organe de traction (12), un couple de rotation en direction d'enroulement de la ceinture sur le rouleau à ceinture (11), et qui transmet, lors de l'entraînement du rouleau à ceinture (11) dans la direction d'enroulement par l'intermédiaire d'une autre source d'entraînement, par exemple d'un dispositif prétensionneur de ceinture (34), un couple de rotation nul ou simplement minimal au premier rouleau d'organe de traction (12).

2. Enrouleur entraîné par ressort, pour des ceintures de sécurité (17) dans des véhicules automobiles, comprenant un rouleau à ceinture (11), relié solidairement en rotation, en particulier coaxialement et directement, à un premier rouleau d'organe de traction (12) en rétrécissement en direction axiale et doté d'une rainure de guidage (15) de forme hélicoïdale sur sa périphérie, ce premier rouleau d'organe de traction étant relié solidairement en rotation à un deuxième rouleau d'organe de traction (14) en rétrécissement en direction axiale opposée, agencé parallèlement en alignement latéral vis-à-vis du premier et pourvu d'une rainure de guidage (18) de forme hélicoïdale, par l'intermédiaire d'un organe de traction flexible (13) enroulé dans la rainure de guidage (15) du premier rouleau dans le sens opposé au sens d'enroulement de la ceinture de sécurité (17) sur le rouleau à ceinture (11) et fixé par une extrémité sur le premier rouleau d'organe de traction (12), l'autre extrémité de l'organe de traction (13) étant fixée sur le deuxième rouleau d'organe de traction (14) et étant enroulée dans sa rainure de guidage (18), et ledit deuxième rouleau d'organe de traction (14) étant précontraint par un système à ressort (16), de préférence un système à ressort spiralé, dans la direction d'enroulement de l'organe de traction (13) sur le deuxième rouleau d'organe de traction (14) et de la ceinture de sécurité (17) sur le rouleau à ceinture (11), les deux rainures de guidage (15, 18) étant réalisées et agencées sur les rouleaux d'organes de traction (12, 14) de telle manière que le morceau (13') tendu de l'organe de traction qui relie les deux rouleaux d'organes de traction (12, 14) passe au moins sensiblement sans coudage dans les deux morceaux d'organes de traction qui se trouvent sur les rouleaux d'organes de traction (12, 14), et dans lequel l'organe de traction (13) est de préférence un câble,
caractérisé en ce que
entre le rouleau à ceinture (11) et le premier rouleau d'organe de traction (12) est interposé un organe de transmission de couple de rotation (46), capable de céder élastiquement, de telle manière que le couple de rotation engendré par le système à ressort (16) sur le premier rouleau d'organe de traction (12) dans le sens d'enroulement de la ceinture est encore entièrement transmis au rouleau à la ceinture (11), cependant que, en cas d'accélération ou de décélération en rotation soudaine du rouleau à ceinture (11), par exemple sous l'action d'un prétensionneur de ceinture, ou bien d'un freinage soudain du rouleau à ceinture (11), l'accélération ou la décélération en rotation transmise en direction d'enroulement ou de déroulement de la ceinture sur le premier rouleau d'organe de traction (12) est réduite au moins aussi longtemps et dans une mesure telle, que le morceau (13') d'organe de traction qui s'étend depuis le premier rouleau d'organe de traction jusqu'au deuxième rouleau d'organe de traction (14) ne se trouve pas temporairement dépourvu de précontrainte en traction.

3. Enrouleur selon la revendication 2, caractérisé en ce que l'organe de transmission de couple de rotation (46) est agencé coaxialement entre les axes de rotation (19, 47) mutuellement alignés du premier rouleau d'organe de traction et du rouleau à ceinture (11).

4. Enrouleur selon l'une ou l'autre des revendications 2 et 3, caractérisé en ce que l'organe de transmission de couple de rotation (46) est précontraint sur une valeur angulaire significative par le couple de précontrainte de rotation du système à ressort (16).

5. Enrouleur selon la revendication 3, caractérisé en ce que l'organe de transmission de couple de rotation est normalement précontraint jusqu'à 30 à 70%, de préférence 40 à 60%, et en particulier environ 50% de sa capacité totale de mobilité angulaire en rotation.

6. Enrouleur selon l'une des revendications 2 à 5, caractérisé en ce que la constante élastique de l'organe de transmission de couple de rotation (46) capable de céder élastiquement est ainsi choisie que l'on évite une détente totale temporaire du morceau (13') de câble qui s'étend entre le premier et le deuxième rouleau d'organe de traction (12, 14).

7. Enrouleur selon l'une des revendications 3 à 6, caractérisé en ce que l'organe de transmission de couple de rotation est un ressort hélicoïdal (46) agencé parallèlement et de manière concentrique vis-à-vis des axes de rotation (19, 47) du premier rouleau d'organe de traction (12) et du rouleau à ceinture (11), les extrémités de ce ressort étant fermement reliées au rouleau à ceinture (11), et respectivement au premier rouleau d'organe de traction (12).

8. Enrouleur selon la revendication 7, caractérisé en ce que le sens d'enroulement du ressort hélicoïdal (46) est tel qu'il est comprimé par le couple de précontrainte en rotation du système à ressort (16).

9. Enrouleur selon l'une des revendications 3 à 6, caractérisé en ce que l'organe de transmission de couple de rotation est un bloc élastique (46') fermement relié d'une part au rouleau à ceinture (11) et d'autre part au premier rouleau d'organe de traction (12).

10. Enrouleur selon l'une des revendications 3 à 6, caractérisé en ce que les axes (19, 47), reliés de préférence coaxialement l'un à l'autre, du premier rouleau d'organe de traction (12) et du rouleau à ceinture (11) sont réalisés eux-mêmes sous la forme de l'organe de transmission de couple de rotation capable de céder élastiquement.

11. Enrouleur selon l'une des revendications 1 à 10, caractérisé en ce que la ceinture de sécurité (17) est déroulée du même côté de l'axe de rotation (19) du rouleau à ceinture (11) que celui du déroulement de l'organe de traction (13) depuis le premier rouleau d'organe de traction (12), mais en direction opposée à celui de l'organe de traction (13), et en ce que le diamètre de l'axe de rotation (20) du deuxième rouleau d'organe de traction (14) agencé sur le côté du premier rouleau d'organe de traction (12) détourné de la direction de sortie de la ceinture est nettement plus faible que celui de l'axe de rotation (19) du rouleau à ceinture (11).

12. Procédé de montage d'un enrouleur entraîné par ressort pour des ceintures de sécurité, comprenant un rouleau à ceinture (11), relié solidairement en rotation, en particulier coaxialement et directement, à un premier rouleau d'organe de traction (12) en rétrécissement en direction axiale et doté d'une rainure de guidage (15) de forme hélicoïdale sur sa périphérie, ce premier rouleau d'organe de traction étant relié solidairement en rotation à un deuxième rouleau d'organe de traction (14) en rétrécissement en direction axiale opposée, agencé parallèlement et en alignement latéral vis-à-vis du premier et pourvu d'une rainure de guidage (18) de forme hélicoïdale, par l'intermédiaire d'un organe de traction flexible (13) enroulé dans la rainure de guidage (15) du premier rouleau dans le sens opposé au sens d'enroulement de la ceinture de sécurité (17) sur le rouleau à ceinture (11) et fixé par une extrémité au rouleau d'organe de traction (12), l'autre extrémité dudit organe de traction (13) étant fixée au deuxième rouleau d'organe de traction (14) de telle manière que l'organe de traction (13) est enroulé dans la rainure de guidage (18) de ce deuxième rouleau, ce dernier étant précontraint au moyen d'un système à ressort (16), de préférence un système à ressort spiralé, dans la direction d'enroulement de l'organe de traction (13) sur le deuxième rouleau d'organe de traction (14) et de la ceinture de sécurité (17) sur le rouleau à ceinture (11), les deux rainures de guidage (15, 18) étant réalisées et agencées sur les rouleaux d'organes de traction (12, 14) de telle manière que le morceau (13') tendu de l'organe de traction qui relie les deux rouleaux d'organes de traction (12, 14) passe sensiblement sans coudage dans les deux morceaux d'organes de traction qui se trouvent sur les rouleaux d'organes de traction (12, 14), et dans lequel ledit organe de traction (13) est de préférence un câble,
caractérisé en ce que, après assemblage du premier rouleau d'organe de traction (12), sur lequel est enroulé l'organe de traction (13), avec le deuxième rouleau d'organe de traction relié au moyen de l'organe de traction (13) sous la précontrainte du ressort, dans le boîtier (18), le premier rouleau d'organe de traction (13) est maintenu à l'aide d'un blocage antirotation (31) à l'encontre d'un déroulement de l'organe de traction (13) par l'intermédiaire du deuxième rouleau d'organe de traction (14) précontraint par un ressort, jusqu'à ce que la liaison solidaire en rotation avec le rouleau à ceinture (11) soit établie.

13. Procédé selon la revendication 12, caractérisé en ce que, après l'assemblage, le premier rouleau d'organe de traction (12) est complètement enroulé par l'organe de traction (13).

14. Procédé selon l'une ou l'autre des revendications 12 et 13, caractérisé en ce que, après l'assemblage, le deuxième rouleau d'organe de traction (14) se trouve totalement sous la précontrainte du ressort.

15. Procédé selon l'une des revendications 12 à 14, caractérisé en ce que le blocage antirotation est réalisé par un élément de blocage antirotation (31) qui se trouve en engagement solidaire en rotation tant avec le premier rouleau d'organe de traction (12) qu'avec le boîtier (28).

16. Procédé selon l'une des revendications 12 à 15, caractérisé en ce que l'élément de blocage antirotation (31) maintient le premier rouleau d'organe de traction (12) centré, même lorsque le rouleau à ceinture (11) n'est pas encore monté.
